# EUROPÄISCHE PATENTSCHRIFT

(11) **EP 0 686 526 B1**
(45) Veröffentlichungstag und Bekanntmachung des Hinweises auf die Patenterteilung: **05.02.1997**
(21) Anmeldenummer: 95107808.8
(22) Anmeldetag: 22.05.1995
(51) Int. Cl.: B60R 21/00, H01H 35/14

(54) **Sensor für starke Verzögerung eines Fahrzeuges zum Auslösen eines Zünders**
Vehicle deceleration sensor for actuating an igniter
Détecteur pour déclencher un allumage en cas de forte décélération d'un véhicule

(30) Priorität: 07.06.1994 DE 4419911
(43) Veröffentlichungstag der Anmeldung: 13.12.1995
(73) Patentinhaber: TRW Occupant Restraint Systems GmbH, 73553 Alfdorf (DE)
(72) Erfinder: Röhrle, Martin, D-73557 Mutlangen (DE)
(74) Vertreter: Degwert, Hartmut, Dipl.-Phys.

(56) Entgegenhaltungen:
- US-A- 3 626 764
- US-A- 3 703 102
- US-A- 4 058 134
- US-A- 4 103 697

## Beschreibung

Die Erfindung betrifft einen Sensor zur fahrzeugsensitiven Auslösung eines Zünders für einen Treibsatz einer Rückhalteeinrichtung in einem Fahrzeug, insbesondere für einen Gurtstraffer oder ein Gassack-Insassenrückhaltesystem, der einen in einem Sensorgehäuse angeordneten und unter der Krafteinwirkung einer Sensorfeder an zumindest zwei Abstützorten abgestützten Massekörper aufweist.

Ein derartiger Sensor ist aus der US-A-3 626 764 bekannt. Ein Schlagbolzen ist axial verschiebbar in einem als Führung dienenden Hohlzylinder angeordnet und durch eine Feder in Richtung auf den Zünder vorgespannt. Der Schlagbolzen wird in einer Bereitschaftsstellung von Kugeln gehalten, die in einer Sperrstellung durch einen den Hohlzylinder umschließenden, axial verschiebbaren Halter gehalten werden, der von einer zweiten Feder in zur Wirkrichtung der ersten Feder entgegengesetzter Richtung vorgespannt ist und dabei den Massekörper gegen eine Grundplatte drückt. Der Massekörper ist so gelagert, daß er bei einer bezüglich dem Hohlzylinder radial wirkenden Beschleunigung, die einen bestimmten Grenzwert übersteigt, ausgelenkt wird, wodurch der Halter verlagert wird, so daß die Kugeln die Sperrstellung verlassen können und der Schlagbolzen freigegeben wird.

Bei einem solchen Sensor ist der Auslösewert schwierig einzustellen, da der Schlagbolzen über die ihn sperrenden Elemente immer auch auf den Massekörper einwirkt, so daß ein präzises Auslösen des Sensors erschwert ist.

Es ist daher die Aufgabe der vorliegenden Erfindung, einen Sensor der gattungsgemäßen Art derart auszubilden, daß eine Auslösung des Zünders noch präziser bei einem vorgegebenen Auslösewert erfolgt.

Diese Aufgabe wird gemäß dem kennzeichnenden Teil des Anspruchs 1 dadurch gelöst, daß der Massekörper an den Abstützorten gegen das Sensorgehäuse abgestützt ist, daß ein Abstützort eine Übertotpunktkinematik aufweist, die nach einer ersten beschleunigungsbedingten Bewegung des Massekörpers um eine vorgegebene Wegstrecke in eine erste Richtung eine zweite Bewegung des Massekörpers in die zur ersten Richtung quer verlaufende Richtung der Federkraft der Sensorfeder zuläßt, und daß der Massekörper mit einem Betätigungsabschnitt versehen ist, der während der zweiten Bewegung mit einem Auslöseabschnitt eines unter der Kraft einer Schlagbolzenfeder gespannten Schlagbolzens in Berührung gerät und dadurch eine Entriegelung des Schlagbolzens und damit eine Auslösung des Zünders bewirkt.

Diese erfindungsgemäße Lagerung des Massekörpers an zwei Abstützorten und die Ausgestaltung eines Abstützortes mit einer Übertotpunktkinematik sorgen dafür, daß beschleunigungsbedingte Bewegungen des Massekörpers in der ersten Richtung, beispielsweise in Fahrtrichtung eines Fahrzeugs, bis zu einem gewissen Beschleunigungsbetrag und bis zu einer bestimmten Beschleunigungsdauer möglich sind, ohne daß es zu einer Entriegelung des Schlagbolzens und damit zu einer Auslösung des Zünders kommt. Diese zulässige Bewegbarkeit des Massekörpers kann durch die Geometrie der Übertotpunktkinematik genau eingestellt werden. Vorteilhaft ist bei der Erfindung, daß der Massekörper im Bereich dieser zulässigen Bewegbarkeit frei bewegbar ist, da er mit dem Auslöseabschnitt des Schlagbolzens nicht in Berührung steht. Erst dann, wenn der Totpunkt der Übertotpunktkinematik überschritten wird und sich der Massekörper in Richtung der Federkraft bewegt, gerät der Massekörper mit dem Schlagbolzen in Berührung und entriegelt diesen. Reibungskräfte zwischen dem Betätigungsabschnitt des Massekörpers und dem Auslöseabschnitt des Schlagbolzens, die die zulässige Bewegbarkeit des Massekörpers behindern und damit den Auslösezeitpunkt beeinflussen könnten, werden dadurch während der zulässigen Bewegbarkeit des Massekörpers verhindert.

Besonders vorteilhaft ist dabei, wenn der Angriffspunkt der Sensorfeder am Massekörper zwischen den beiden Abstützorten liegt, da dann auf einfache Weise eine definierte Abstützkraft des Massekörpers im Bereich des die Übertotpunktkinematik aufweisenden Abstützortes erzielt werden kann.

Eine vorteilhafte Ausgestaltung des Sensors zeichnet sich dadurch aus, daß der die Übertotpunktkinematik aufweisende Abstützort eine erste massekörperseitige Schrägfläche aufweist, die bezüglich der ersten Richtung unter einem Neigungswinkel derart geneigt ist, daß der Abstand zwischen dem bezüglich der ersten Richtung vorne gelegenen Teil der Schrägfläche und einer parallel zu ersten Richtung und durch den Schwerpunkt des Massekörpers verlaufenden Bewegungsmittellinie kleiner ist als der Abstand zwischen dem in der ersten Richtung hinten gelegenen Teil der Schrägfläche und der Bewegungsmittellinie, daß der Abstützort weiterhin eine gehäuseseitige Schrägfläche aufweist, die im wesentlichen parallel zur massekörperseitigen Schrägfläche verläuft, und daß die Schrägflächen in jeweils eine Rastausnehmung übergehen, welche eine Bewegung des Massekörpers in Richtung der Federkraft der Sensorfeder zuläßt. Mit dieser Ausgestaltung wird auf besonders einfache und vorteilhafte Weise eine Übertotpunktkinematik geschaffen, wobei durch den Neigungswinkel der Schrägflächen die Größe der für die Auslösung erforderlichen Beschleunigung einstellbar ist. Durch die Länge der Schrägflächen kann die für die Auslösung erforderliche Dauer der Beschleunigungseinwirkung eingestellt werden.

Eine besonders zuverlässige Ausgestaltung dieses Sensors zeichnet sich dadurch aus, daß die Schrägflächen im wesentlichen gleich lang sind, daß der hintere Teil der massekörperseitigen Schrägfläche in einer hinteren Kante endet und der Massekörper an der hinteren Kante einen die erste Rastausnehmung bildenden Stufensprung aufweist, der entgegen der Richtung der Federkraft der Sensorfeder gerichtet ist, und daß der vordere Teil der gehäuseseitigen Schrägfläche in einer vorderen Kante endet und das Sensorgehäuse an der vorderen Kante einen die zweite Rastausnehmung bildenden Stufensprung aufweist, der in Richtung der Federkraft der Sensorfeder gerichtet ist. Diese Ausgestaltung weist nicht nur eine hohe Zuverlässigkeit auf, sondern ist auch einfach zu fertigen.

Weist der andere Abstützort eine massekörperseitige Abstützfläche sowie eine gehäuseseitige Abstützfläche auf, die zueinander und zur ersten Richtung im wesentlichen parallel verlaufen, so werden an diesem Abstützort definierte Bedingungen geschaffen, die die durch die Übertotpunktkinematik bestimmte Auslösung unabhängig von der Höhe und der Dauer der einwirkenden Beschleunigung gleichmäßig beeinflussen.

Besonders vorteilhaft ist eine Ausgestaltung des Sensors, bei der an den Abstützorten jeweils ein Wälzkörper zwischen dem Massekörper und dem Sensorgehäuse vorgesehen ist. Hierbei tritt im Bereich der Abstützorte vorwiegend lediglich Rollreibung auf.

Weiter verbessert werden kann das Reibungsverhalten noch dadurch, daß der Wälzkörper von einer Kugel gebildet ist.

Eine besonders vorteilhafte Konstruktion des Sensors zeichnet sich dadurch aus, daß die Sensorfeder von einer Zugfeder gebildet ist und daß der Massekörper an der Sensorfeder pendelartig aufgehängt ist.

Eine besonders kompakte Ausgestaltung des Sensors kann dann erzielt werden, wenn der Massekörper einen mit einem Durchbruch versehenen Winkelarm aufweist, der den Betätigungsabschnitt bildet, sich im wesentlichen rechtwinklig zur ersten Richtung erstreckt und den Auslöseabschnitt des Schlagbolzens zumindest teilweise umgreift.

Dabei ist eine besonders vorteilhafte und stabile Ausgestaltung dann gegeben, wenn der Durchbruch von einer Öffnung im Winkelarm gebildet ist, in die der Auslöseabschnitt des Schlagbolzens eingreift.

Weitere Merkmale und Vorteile der Erfindung ergeben sich aus der folgenden Beschreibung einer Ausführungsform der Erfindung und aus der Zeichnung, auf die Bezug genommen wird. In der Zeichnung zeigen:
Fig. 1 eine teilweise geschnittene Seitenansicht eines Sensors gemäß der Erfindung,
Fig. 2 eine vergrößerte Ansicht der Einzelheit X in Fig. 1 und
Fig. 3 eine vergrößerte Ansicht der Einzelheit Y in Fig. 1.

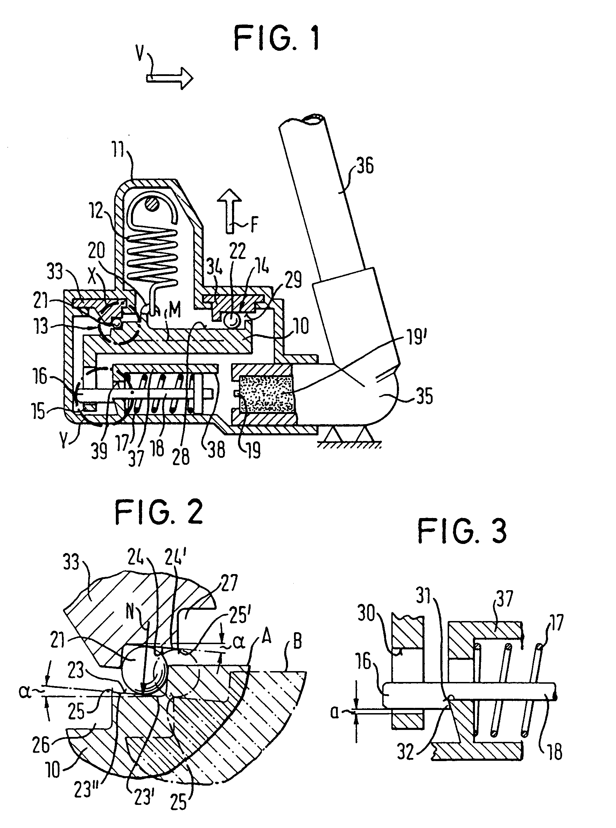

In Fig. 1 ist ein Sensor zur fahrzeugsensitiven, also beschleunigungsbedingten Auslösung eines Zünders 19 für einen Treibsatz eines Gurtstraffers gezeigt. Der Zünder 19 ist in einem Generatorgehäuse 35 angebracht, in welchem auch der Treibsatz 19' vorgesehen ist. Am äußeren Ende des Generatorgehäuses 35 ist der Zylinder 36 eines an sich bekannten Gurtstraffers eingesetzt. Das andere Ende des Generatorgehäuses 35 ist in das Gehäuse 11 des Sensors eingesetzt und dort auf herkömmliche Weise mit dem Gehäuse verbunden.

Dem Zünder axial gegenüber gelegen ist ein Schlagbolzen 18, der in einem zylinderartigen inneren Gehäuseabschnitt 37 axial verschiebbar angeordnet ist und von einer als Druckfeder ausgebildeten Schlagbolzenfeder 17 in Richtung auf den Zünder 19 vorgespannt ist. Der Schlagbolzen 18 dringt mit einem hinteren Auslöseabschnitt 16 durch eine rückwärtige Öffnung 39 des inneren Gehäuseabschnitts 37 hindurch und greift mit einem hakenartigen Arretierabschnitt 32 hinter eine am Umfang der Öffnung 39 ausgebildete Arretierkante 31. Auf diese Weise wird der Schlagbolzen 18 in seiner gespannten Lage arretiert und so in axialem Abstand zum Zünder 19 gehalten.

Im Sensorgehäuse 11 ist ein im wesentlichen L-förmig ausgebildeter Massekörper 10 an einer im oberen Teil des Sensorgehäuses aufgehängten und als Zugfeder ausgebildeten Sensorfeder 12 aufgehängt. Die Sensorfeder 12 greift an einem als Haken ausgebildeten Angriffspunkt 20 am langen Schenkel des L-förmig ausgebildeten Massekörpers 10 an. Der Angriffspunkt 20 liegt dabei in einem Abstand von ungefähr einem Drittel der Länge des längeren Abschnitts vom kürzeren Abschnitt des L-förmigen Massekörpers 10 beabstandet.

Beiderseits des Angriffspunktes 20 stützt sich der Massekörper 10 an Abstützorten 13 und 14 jeweils über einen Wälzkörper 21, 22 auf mit dem Gehäuse 11 verbundenen Stützkörpern 33 und 34 ab.

Der gesamte Sensor ist derart in einem Fahrzeug angeordnet, daß die Druckkraft der den Schlagbolzen beaufschlagenden Schlagbolzenfeder 17 in einer der Fahrtrichtung entsprechenden ersten Richtung V wirkt. Auch der längere Schenkel des L-förmigen Massekörpers erstreckt sich in der ersten Richtung V parallel zur Fahrtrichtung. Die Zugkraft der den Massekörper 10 gegen das Gehäuse ziehenden Sensorfeder 12 wirkt in einer Richtung F, die im wesentlichen rechtwinklig zur Fahrtrichtung V steht.

Der in Fahrtrichtung hintere Abstützort 13 weist eine Übertotpunktkinematik auf. Dazu ist am Massekörper eine erste Schrägfläche 23 vorgesehen, die bezüglich der Fahrtrichtung V unter einem Neigungswinkel α derart geneigt ist, daß der Abstand zwischen dem bezüglich der Fahrtrichtung vorne gelegenen Teil 23' der Schrägfläche 23 und einer parallel zur Fahrtrichtung und durch den Schwerpunkt des Massekörpers 10 verlaufenden Bewegungsmittellinie M kleiner ist als der Abstand zwischen dem in Fahrtrichtung hinten gelegenen Teil 23'' der Schrägfläche und der Bewegungsmittellinie M. Eine parallel zur massekörperseitigen Schrägfläche 23 gelegene Schrägfläche 24 ist am gehäuseseitigen Stützköper 33 im Bereich des hinteren Abstützortes 13 vorgesehen. Der als Kugel ausgebildete Wälzkörper steht dabei, wie in Fig. 2 zu sehen ist, sowohl mit der massekörperseitigen Schrägfläche 23 als auch mit der gehäuseseitigen Schrägfläche 24 in Berührung.

Die massekörperseitige Schrägfläche 23 geht an ihrer in Fahrtrichtung V hinten gelegenen Kante 25 in eine massekörperseitige Rastausnehmung 26 über, die durch einen Stufensprung im längeren Schenkel des L-förmigen Massekörpers ausgebildet ist. Die gehäuseseitige Schrägfläche 24 geht an ihrer in Fahrtrichtung V vorderen Kante 25' unter Bildung eines Stufensprungs in eine gehäuseseitige Rastausnehmung 27 über. Der gehäuseseitige Stufensprung ist dabei in Richtung F der Federkraft der Sensorfeder 12 gerichtet, während der massekörperseitige Stufensprung entgegen der Richtung F der Federkraft der Sensorfeder gerichtet ist.

Der andere, vordere Abstützort 14 des Massekörpers 10 weist eine massekörperseitige Abstützfläche 28 sowie eine gehäuseseitige Abstützfläche 29 auf, die zueinander und zur Fahrtrichtung V im wesentlichen parallel verlaufen. Ein als Kugel ausgebildeter Wälzkörper 22 ist zwischen der massekörperseitigen Abstützfläche 28 und der gehäuseseitigen Abstützfläche 29 angeordnet und gestattet ein Abrollen des Massekörpers 10 auf dem die gehäuseseitige Abstützfläche 29 aufweisenden und mit dem Gehäuse verbundenen Stützkörper 34.

Der als Winkelarm 31 ausgebildete kürzere Schenkel des L-förmigen Massekörpers 10 weist einen von einer Öffnung gebildeten Durchbruch 30 auf, in welchen der Auslöseabschnitt 16 des Schlagbolzens 18 eingreift. Der Auslöseabschnitt 16 des Schlagbolzens 18 ist dabei um einen Minimalwert a vom Innenumfang des Durchbruchs 30 im Winkelarm 31 beabstandet, so daß im Normalfall keine Berührung zwischen dem Massekörper 10 und dem Schlagbolzen 18 auftritt.

Der Massekörper kann als Stanzteil, Druckgußteil oder Sinterteil ausgebildet sein. Auch die Lagerböcke oder Stützkörper 33, 34 können als Stanzteil, Druckgußteil oder Sinterteil ausgebildet sein und auf herkömmliche Weise am Gehäuse 11 befestigt sein.

Nachfolgend wird die Funktionsweise des Sensors beschrieben. Bei einer auftretenden Fahrzeugverzögerung entgegen der Fahrtrichtung V bewirkt die im Massekörper 10 auftretende Trägheitskraft ein Kräfteungleichgewicht, d.h., daß die Trägheitskraft in Richtung V größer ist als die horizontale Kraftkomponente der den Massekörper 10 über den Wälzkörper 21 gegen das Gehäuse 11 abstützenden Normalkraft N. Daher bewegt sich der Massekörper 10 in Fahrtrichtung V des Fahrzeugs weiter nach vorwärts. Bei diesem Bewegungsvorgang rollen die Wälzkörper 21 und 22 auf ihren Laufbahnen ab.

Bei einer unkritischen Verzögerung bewegt sich der Massekörper 10 relativ zum Gehäuse 11 in Fahrtrichtung V nur so weit, daß die vordere Kante 25' der gehäuseseitigen Schrägfläche 24 noch nicht lotrecht über der hinteren Kante 25 der massekörperseitigen Schrägfläche 23 steht, so daß bei einem Abklingen einer derartigen Verzögerung der Massekörper 10 wieder in seine Ausgangsstellung (Pos. A in Fig 2) zurückgestellt wird.

Bei einer kritischen Verzögerung erreicht der Massekörper 10 eine Position B, in der die vordere Kante 25' der gehäuseseitigen Schrägfläche 24 lotrecht über der hinteren Kante 25 der massekörperseitigen Schrägfläche steht und wird darüberhinaus weiterbewegt. Der Wälzkörper 21 taucht dabei in die stufenartig ausgebildeten Rastausnehmungen 26 und 27 ein, so daß der Massekörper 10 in seinem hinteren Bereich in Richtung F der Federkraft der Sensorfeder ausgelenkt werden kann, wobei er um den vorderen Wälzkörper 22 schwenkt.

Durch diese Auslenkung des Massekörpers 10 wird auch der Winkelarm 15 des Massekörpers 10 in Richtung F der Federkraft der Sensorfeder bewegt, wodurch der Auslöseabschnitt 16 des Schlagbolzens 18 in Anlage mit der Innenwandung der Ausnehmung 30 im Winkelarm 15 gerät und von diesem ebenfalls in Richtung F der Federkraft der Sensorfeder gezogen wird. Dabei gerät der hakenartige Arretierabschnitt 32 des Schlagbolzens 18 außer Eingriff mit der Arretierkante 31, wodurch der Schlagbolzen freigegeben und unter Entspannung der Schlagbolzenfeder 17 zum Zünder 19 hin beschleunigt wird und so den Zünder auslöst.

Das Vorsehen zweier getrennter Federn, nämlich der Sensorfeder 12 und der Schlagbolzenfeder 17 besitzt den Vorteil, daß sich die auf die Fahrtzeugbeschleunigung reagierenden Bauelemente und die Bauelemente, die für die Auslösung des Zünders 19 erforderlich sind, nicht gegenseitig, beispielsweise durch Reibung, beeinflussen.

Das Vorsehen der Wälzkörper 21 und 22 zwischen dem Massekörper 10 und den gehäuseseitigen Stützkörpern 33 und 34 besitzt den Vorteil, daß an diesen Stellen nur Rollreibung auftritt, was den Einfluß der Oberflächenbeschaffenheit der Reibpartner reduziert und somit eine größere Reproduzierbarkeit und damit auch eine größere Zuverlässigkeit des Sensors schafft. Auch der Anfahrwiderstand wird im Gegensatz zur Gleitreibung wesentlich verringert. Der Selbsthemmungsbereich, in dem die Sensormasse stehenbleiben könnte, ist sehr klein, da sich das System in einem labilen Gleichgewichtszustand befindet und der Hebelarm der Rollreibung sehr klein ist.

Das fest mit dem Sensorgehäuse 11 verbundene Generatorgehäuse 35 sorgt dafür, daß ein Seilbiegesteifigkeits-Einfluß auf das Sensorauslöseverhalten ausgeschaltet ist. Auch kann dadurch die Gurtstraffereinheit näher am Aufroller eingesetzt werden. Außerdem entfällt der Platzbedarf für einen Pendelausschlag, so daß die gesamte Einheit kompakter aufgebaut werden kann. Der Entfall der Pendellagerung sorgt zudem für eine höhere Festigkeit der Verbindung mit dem Generatorgehäuse.

Dadurch, daß der Sensor einfach auf das Generatorgehäuse 35 aufgesteckt und dort befestigt werden kann, ist es möglich, den Sensor als letztes Teil nach erfolgter Montage des Gurtstraffers aufzusetzen, was die Montage wesentlich vereinfacht und die Montagesicherheit erhöht. Außerdem wird dadurch eine Baugruppenmontage möglich. Der erfindungsgemäße Sensor ist zudem so aufgebaut, daß er sowohl auf der Fahrer als auch auf der Beifahrerseite verwendbar ist.

## Patentansprüche

1. Sensor zur fahrzeugsensitiven Auslösung eines Zünders für einen Treibsatz einer Rückhalteeinrichtung in einem Fahrzeug, insbesondere für einen Gurtstraffer oder ein Gassack-Insassenrückhaltesystem, der einen in einem Sensorgehäuse (11) angeordneten und unter der Krafteinwirkung einer Sensorfeder (12) an zumindest zwei Abstützorten (13, 14) abgestützten Massekörper (10) aufweist, dadurch gekennzeichnet, daß der Massekörper (10) an den Abstützorten gegen das Sensorgehäuse (11) abgestützt ist, daß ein Abstützort (13) eine Übertotpunktkinematik aufweist, die nach einer ersten beschleunigungsbedingten Bewegung des Massekörpers (10) um eine vorgegebene Wegstrecke in eine erste Richtung (V) eine zweite Bewegung des Massekörpers (10) in die zur ersten Richtung (V) quer verlaufende Richtung (F) der Federkraft der Sensorfeder (12) zuläßt, und daß der Massekörper (10) mit einem Betätigungsabschnitt (15) versehen ist, der während der zweiten Bewegung mit einem Auslöseabschnitt (16) eines unter der Kraft einer Schlagbolzenfeder (17) gespannten Schlagbolzens (18) in Berührung gerät und dadurch eine Entriegelung des Schlagbolzens (18) und damit eine Auslösung des Zünders (19) bewirkt.

2. Sensor nach Anspruch 1, dadurch gekennzeichnet, daß der Angriffspunkt (20) der Sensorfeder (12) am Massekörper (10) zwischen den zwei Abstützorten (13, 14) liegt.

3. Sensor nach Anspruch 1 oder 2, dadurch gekennzeichnet, daß der die Übertotpunktkinematik aufweisende Abstützort (13) eine erste massekörperseitige Schrägfläche (23) aufweist, die bezüglich der ersten Richtung (V) unter einem Neigungswinkel (a) derart geneigt ist, daß der Abstand zwischen dem bezüglich der ersten Richtung (V) vorne gelegenen Teil (23') der Schrägfläche (23) und einer parallel zur ersten Richtung (V) und durch den Schwerpunkt des Massekörpers (10) verlaufenden Bewegungsmittellinie (M) kleiner ist als der Abstand zwischen dem in der ersten Richtung (V) hinten gelegenen Teil (23'') der Schrägfläche (23) und der Bewegungsmittellinie (M), daß der Abstützort weiterhin eine gehäuseseitige Schrägfläche (24) aufweist, die im wesentlichen parallel zur massekörperseitigen Schrägfläche (23) verläuft, und daß die Schrägflächen (23, 24) in jeweils eine Rastausnehmung (26, 27) übergehen, welche eine Bewegung des Massekörpers (10) in Richtung (F) der Federkraft der Sensorfeder (12) zuläßt.

4. Sensor nach Anspruch 3, dadurch gekennzeichnet, daß die Schrägflächen (23, 24) im wesentlichen gleich lang sind, daß der hintere Teil (23'') der massekörperseitigen Schrägfläche (23) in einer hinteren Kante (25) endet und der Massekörper (10) an der hinteren Kante (25) einen die erste Rastausnehmung (26) bildenden Stufensprung aufweist, der entgegen der Richtung (F) der Federkraft der Sensorfeder (12) gerichtet ist, und daß der vordere Teil (24') der gehäuseseitigen Schrägfläche (24) in einer vorderen Kante (25') endet und das Sensorgehäuse (11) an der vorderen Kante (25') einen die zweite Rastausnehmung (27) bildenden Stufensprung aufweist, der in Richtung (F) der Federkraft der Sensorfeder (12) gerichtet ist.

5. Sensor nach einem der vorhergehenden Ansprüche, dadurch gekennzeichnet, daß der andere Abstützort (14) eine massekörperseitige Abstützfläche (28) sowie eine gehäuseseitige Abstützflache (29) aufweist, die zueinander und zur ersten Richtung (V) im wesentlichen parallel verlaufen.

6. Sensor nach einem der vorhergehenden Ansprüche, dadurch gekennzeichnet, daß an den Abstützorten (13, 14) jeweils ein Wälzkörper (21, 22) zwischen dem Massekörper (10) und dem Sensorgehäuse (11) vorgesehen ist.

7. Sensor nach einem der vorhergehenden Ansprüche, dadurch gekennzeichnet, daß die Sensorfeder (12) von einer Zugfeder gebildet ist und daß der Massekörper (10) an der Sensorfeder (12) pendelartig aufgehängt ist.

8. Sensor nach einem der vorhergehenden Ansprüche, dadurch gekennzeichnet, daß der Massekörper (10) einen mit einem Durchbruch (30) versehenen Winkelarm (31) aufweist, der den Betätigungsabschnitt (15) bildet, sich im wesentlichen rechtwinklig zur ersten Richtung (V) erstreckt und den Auslöseabschnitt (16) des Schlagbolzens (18) zumindest teilweise umgreift.

9. Sensor nach Anspruch 8, dadurch gekennzeichnet, daß der Durchbruch (30) von einer Öffnung im Winkelarm (31) gebildet ist, in die der Auslöseabschnitt (16) des Schlagbolzens (18) eingreift.

10. Sensor nach einem der vorstehenden Ansprüche, dadurch gekennzeichnet, daß das Sensorgehäuse (11) starr mit einem rohrförmigen, abgewinkelten Generatorgehäuse (35) verbunden ist, das einen ersten, in das Sensorgehäuse (11) hineinragenden und den Treibsatz (19') sowie den Zünder (19) aufnehmenden Schenkel und einen zweiten Schenkel aufweist, in dem ein rohrförmiger Zylinder (36) eines Strafferantriebs verankert ist.

## Claims

1. A sensor for the vehicle-sensitive activation of a fuse for a propellant charge of a restraining device in a vehicle, in particular for a belt pretensioner or a gas bag occupant restraining system, comprising an inertial mass (10) arranged in a sensor housing (11) and urged against the sensor housing (11) at at least two support sites (13, 14) under the action of a sensor spring (12), characterized in that the inertial mass (10) is supported at the sensor housing (11) in the support sites, in that one support site (13) is provided with an over-deadcenter system which after a first acceleration related movement of the inertial mass (10) along a predetermined path in a first direction (V) permits a second movement of the inertial mass (10) in the direction (F) of the force of the sensor spring (12), said direction extending athwart the first direction (V), and in that the inertial mass (10) is provided with an actuating section (15) which during the second movement comes into engagement with a trip section (16) of a strike pin (18) biased by the force of a strike pin spring (17), and so causes release of the strike pin (18) and accordingly activation of the fuse (19).

2. The sensor as claimed in claim 1, characterized in that the point (20) of engagement of the sensor spring (12) on the inertial mass (10) is placed between the two support sites (13, 14).

3. The sensor as claimed in claim 1 or in claim 2, characterized in that the support site (13) having the over-deadcenter system possesses a first oblique surface (23) on the side of the inertial mass, which surface is inclined to the first direction (V) at an angle (a) of inclination so that the distance between the part (23') of the oblique surface (23), which is to the fore as related to the first direction (V), and a center line (M) of movement extending in parallelism to the first direction (V) and through the center of gravity of the inertial mass (10) is smaller than the distance between the part (23'') of the oblique surface (23), which is to the rear as related to the first direction (V), and the center line (M) of movement, in that the support site furthermore has an oblique surface (24) on the side of the housing and which extends essentially parallel to the oblique surface (23) on the side of the inertial mass, and in that the oblique surfaces (23, 24) each merge with a respective detent recess (26, 27) which permits a movement of the inertial mass (10) in the direction (F) of the force of the sensor spring (12).

4. The sensor as claimed in claim 3, characterized in that the oblique surfaces (23, 24) are essentially equal in length, in that the rear part (23'') of the oblique surface (23) on the side of the inertial mass terminates in a rear edge (25), and at the rear edge (25) the inertial mass (10) possesses a step constituting the first detent recess (26), said step being directed against the direction (F) of the force of the sensor spring (12), and in that the front part (24') of the oblique surface (24) on the side of the housing terminates in a front edge (25'), and the sensor housing (11) possesses a step at the front edge (25'), said step constituting the second detent recess (27) and being directed in the direction (F) of the force of the sensor spring (12).

5. The sensor as claimed in any one of the preceding claims, characterized in that the other support site (14) involves a support surface (28) on the side of the inertial mass and furthermore a support surface (29) on the side of the housing, which extend essentially in parallelism to one another and to the first direction (V).

6. The sensor as claimed in any one of the preceding claims, characterized in that a roller body (21, 22) is provided between the inertial mass (10) and the sensor housing (11) at each of the support sites (13, 14).

7. The sensor as claimed in any one of the preceding claims, characterized in that the sensor spring (12) is constituted by a tension spring and in that inertial mass (10) is attached to the sensor spring (12) like a pendulum.

8. The sensor as claimed in any one of the preceding claims, characterized in that the inertial mass (10) possesses a bell crank (31) provided with a cutout (30), which constitutes the actuating section (15), extends substantially at a right angle to the first direction (V) and at least partially fits around the trip section (16) of the strike pin (18).

9. The sensor as claimed in claim 8, characterized in that the cutout (30) is constituted by an opening in the bell crank (31), into which the trip section (16) of the strike pin (18) engages.

10. The sensor as claimed in any one of the preceding claims, characterized in that the sensor housing (11) is rigidly connected to a generator housing (35) which is tubular and forms a knee, the generator housing comprising a first leg projecting into the sensor housing (11) and accommodating the propellant charge (19') and the fuse (19), and a second leg in which a tubular cylinder (36) of a pretensioner drive is anchored.

## Revendications

1. Détecteur servant au déclenchement d'un allumeur, en fonction des mouvements d'un véhicule, pour un pain de poudre d'un système de retenue dans un véhicule, en particulier pour un tendeur de ceinture ou un système de retenue à coussin à gaz des passagers, qui présente un corps massif (10) disposé dans un boîtier de détecteur (11) et qui prend appui sous l'action de la force d'un ressort de détecteur (12) en au moins deux points d'appui (13. 14), caractérisé en ce que le corps massif (10) prend appui aux points d'appui contre le boîtier (11) du détecteur, en ce que l'un des points d'appui (13) présente une cinématique à dépassement de point mort, qui permet après un premier mouvement du corps massif (10), dû à une accélération, d'une amplitude prédéfinie dans une première direction (V), un deuxième mouvement du corps massif (10) dans la direction (F) de la force du ressort du détecteur (12), qui s'étend perpendiculairement à la première direction (V), et en ce que le corps massif (10) est pourvu d'une section d'actionnement (15), qui pendant le second mouvement vient en contact avec une section de déclenchement (16) d'un percuteur (18), tendu grâce à la force d'un ressort de percuteur (17), et provoque de cette façon un déverrouillage du percuteur (18) et ainsi un déclenchement de l'allumeur (19).

2. Détecteur selon la revendication 1, caractérisé en ce que le point de venue en prise (20) du ressort du détecteur (12) sur le corps massif (10) se trouve entre les deux points d'appui (13, 14).

3. Détecteur selon la revendication 1 ou 2, caractérisé en ce que le point d'appui (13), qui présente la cinématique à dépassement de point mort, présente une première surface oblique (23) du côté du corps massif, qui est inclinée par rapport à la première direction (V) d'un angle (a) tel que la distance entre la partie (23') de la surface oblique (23), qui est située en avant par rapport à la première direction (V), et une ligne médiane de mouvement (M), qui s'étend parallèlement à la première direction (V), et passe par le centre de gravité du corps massif (10), est plus petite que la distance comprise entre la partie (23'') de la surface oblique (23), siteée en arrière dans la première direction (V) et la ligne médiane de mouvement (M), en ce que le point d'appui présente en outre une surface oblique (24), située du côté du boîtier, qui s'étend sensiblement parallèlement à la surface oblique (23), située du côté du corps massif, et en ce que les surfaces obliques (23, 24) se transforment respectivement en un évidement d'encliquetage (26, 27), lequel permet d'avoir un mouvement du corps massif (10) dans le sens (F) de la force du ressort du détecteur (12).

4. Détecteur selon la revendication 3, caractérisé en ce que les surfaces obliques (23, 24) ont sensiblement la même longueur, en ce que la partie arrière (23'') de la surface oblique (23), située du côté du corps massif, se termine par une arête postérieure (25) et le corps massif (10) présente sur l'arête postérieure (25) un décrochement, qui forme le premier évidement d'encliquetage (26), qui est orienté en sens opposé du sens (F) de la force du ressort du détecteur (12) et en ce que la partie antérieure (24') de la surface oblique (24), située du côté du boîtier, se termine par une arête antérieure (25') et le boîtier du détecteur (11) présente sur l'arête antérieure (25') un décrochement formant le second évidement d'encliquetage (27), qui est orienté dans le sens (F) de la force du ressort de détecteur (12).

5. Détecteur selon l'une des revendications précédentes, caractérisé en ce que l'autre point d'appui (14) présente une surface d'appui (28) située du côté du corps massif ainsi qu'une surface d'appui (29), située du côté du boîtier, qui s'étendent sensiblement parallèlement l'une à l'autre et à la première direction (V).

6. Détecteur selon l'une des revendications précédentes, caractérisé en ce que l'on prévoit sur les points d'appui (13,14) respectivement un corps de roulement (21, 22) entre le corps massif (10) et le boîtier du détecteur (11).

7. Détecteur selon l'une des revendications précédentes, caractérisé en ce que le ressort du détecteur (12) est constitué par un ressort de traction et en ce que le corps massif (10) est accroché à la manière d'un pendule au ressort du détecteur (12).

8. Détecteur selon l'une des revendications précédentes, caractérisé en ce que le corps massif (10) présente un bras à ressaut (31) pourvu d'un passage (30), qui forme la section d'actionnement (15), s'étend sensiblement à angle droit par rapport à la première direction (V) et entoure la section de déclenchement (16) du percuteur (18) au moins en partie.

9. Détecteur selon la revendication 8, caractérisé en ce que le passage (30) est formé par une ouverture dans le bras à ressaut (31) dans laquelle vient en prise la section de déclenchement (16) du percuteur (18).

10. Détecteur selon l'une des revendications précédentes, caractérisé en ce que le boîtier du détecteur (11) est relié de façon rigide à un boîtier de générateur (35) en forme de tube, coudé, qui présente une première branche, pénétrant dans le boîtier du détecteur (11) et recevant le pain de poudre (19') ainsi que l'allumeur (19), et une seconde branche, dans laquelle est ancrée un cylindre (36), en forme de tube, d'un mécanisme d'entraînement du tendeur de la ceinture.
